# FASCICULE DE BREVET EUROPEEN

(11) **EP 1 258 004 B1**
(45) Date de publication et mention de la délivrance du brevet: **13.08.2008**
(21) Numéro de dépôt: 01904042.7
(22) Date de dépôt: 02.02.2001
(51) Int. Cl.: G11C 5/00, G11C 16/10

(54) **ECRITURE EN TEMPS REEL SECURISEE POUR MEMOIRE NON VOLATILE**
GESCHUTZTES ECHTZEIT-SCHREIBEN IN EINEN NICHTFLÜCHTIGEN SPEICHER
SECURE REAL TIME WRITING FOR NON VOLATILE STORAGE

(30) Priorité: 11.02.2000 FR 0001869
(43) Date de publication de la demande: 20.11.2002
(73) Titulaire: GEMPLUS, 13420 Gémenos (FR)
(72) Inventeur: BRINGER, Laurence, F-13119 St Savournin (FR); GUTERMAN, Pascal, F-13360 Roquevaire (FR)
(86) Numéro de dépôt international: PCT/FR2001/000325
(87) Numéro de publication internationale: WO 2001/059788

(56) Documents cités:
- EP-A- 0 498 392
- US-A- 5 663 901
- D.J.WOLLONS: "Microelectronic Systems Level III" 1985 , HUTCHINSON/BTEC , LONDON,UK XP002153274 page 168 -page 171; figures 8.3,8.4

## Description

La présente invention concerne potentiellement toute carte à puce, ou tout objet électronique portable équivalent, disposant d'une mémoire non volatile, par exemple une mémoire programmable et effaçable électriquement EEPROM ou une mémoire FLASH.

Les cartes à puce (smart card), dites également cartes à circuit intégré ou cartes à microcontrôleur, comme la plupart des objets électroniques portables équivalents, tels que calculettes, organiseurs, porte-monnaie électroniques, jeux électroniques, terminaux radiotéléphoniques, télécommandes; etc., stockent différents types d'information en mémoire non volatile.

Cependant, ce stockage de données est soumis, notamment dans les applications à base de carte à puce, à différentes contraintes, telles que par exemple le temps d'écriture et la sécurité.

Le temps d'écriture est dépendant du type de la mémoire. Il est relativement long lorsque la couche application dans la carte est soumise à de fortes contraintes temporelles comme par exemple au cours de transactions bancaires, ou dans des cartes à puce sans contact, etc.

Dans bien des cas, les données confiées à la mémoire non volatile sont considérées sensibles par la couche application. Il importe donc que le processus d'écriture de ces données soit réalisé dans des conditions sûres. Tout problème constaté lors de l'écriture de ces données comme un échec d'écriture ou un défaut ou une indisponibilité de fonctionnement de la mémoire, doit être signalé notamment à la couche application qui prendra les mesures nécessaires, telles qu'annulation de la transaction; invalidation de la carte, etc.

Pour réaliser cette fonction d'écriture, le système d'exploitation dans la carte à puce fournit un certain nombre de services, constituant des points d'entrée logiciels, dédiés à la gestion de la mémoire, qui sont appelés ci-après "driver".

Le mot "application" désigne ci-après l'ensemble du logiciel réalisant les fonctionnalités applicatives supportées par la carte au niveau de la couche application de celle-ci. Le driver rassemble des sous-programmes notamment d'écriture et lecture de données contenus dans une couche de driver.

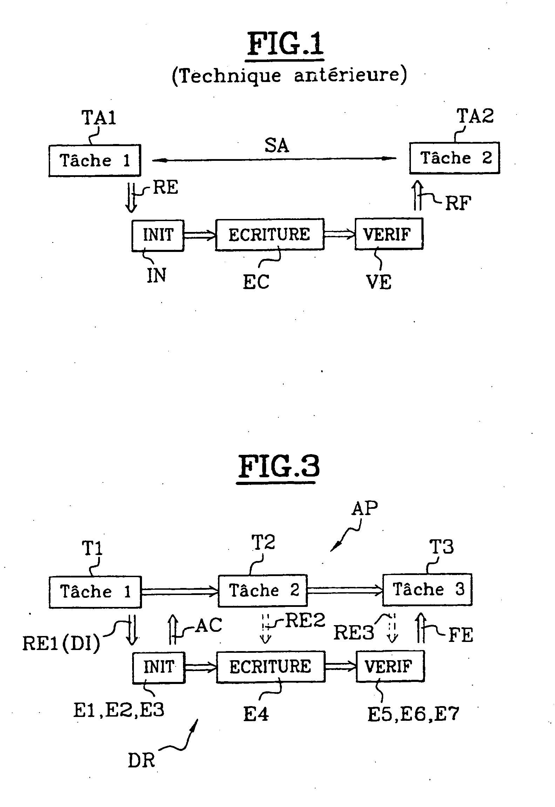

La figure 1 est un diagramme temporel montrant, de la gauche vers la droite, le déroulement classique d'un processus d'écriture dans une carte à mémoire demandé par l'application et exécuté par le driver. Le processus d'écriture est généralement divisé en trois étapes :
- une étape d'initialisation IN du contrôleur assurant les fonctionnalités de commande en écriture et en lecture de la mémoire, en réponse à une requête d'écriture RE de l'application ;
- une étape d'écriture EC pour écrire une donnée contenue dans la requête RE, dont la durée dépend des performances techniques du contrôleur de mémoire ;
- une étape de vérification VE pour vérifier l'exactitude de la donnée écrite dans la mémoire ; la vérification consiste à lire dans la mémoire la donnée écrite à l'étape EC et à comparer la donnée lue avec la donnée initiale contenue dans la requête RE.

Puis, le contrôle du processus d'écriture est rendu par le driver à l'application en lui transmettant une réponse de fin RF après que la dernière étape de vérification VE soit terminée. Sachant que l'ensemble du processus d'écriture est souvent relativement long en dépendance de la technologie utilisée pour la fabrication de la mémoire, les performances de l'application en sont donc pénalisées. L'application est ainsi suspendue jusqu'à la fin du processus d'écriture, comme indiquée en SA entre deux tâches d'application successives TA1 et TA2 dans la figure 1. Le document US-A-5663910 montre un processus d'écriture classique.

Dans le domaine de l'informatique traditionnelle, l'écriture de données "en temps réel" est une solution classique qui permet l'exécution de l'écriture "en temps masqué" des données, c'est-à-dire sans bloquer le déroulement de l'application. Cette solution s'applique plus particulièrement aux moyens de stockage de type disquette ou disque dur.

Par contre, l'écriture "en temps masqué" des données est beaucoup plus difficile à mettre en oeuvre dans le cadre d'un système d'exploitation dédié à une carte à puce. Le système d'exploitation doit en général s'adapter à des environnements matériels pauvres notamment en terme de mémoire de type RAM. De ce fait, il est en général impossible de garder en mémoire la donnée à écrire en vue de la vérification finale.

L'invention vise à adapter à une carte à puce ou à un objet électronique portable équivalent le concept "d'écriture temps réel", sans perte de performance en ce qui concerne la sécurité du logiciel.

A cette fin, un procédé pour écrire des données initiales contenues dans une requête d'écriture transmise par un moyen de traitement de données à un moyen de contrôle d'écriture-lecture d'une mémoire non volatile dans un objet électronique portable de type carte à puce, est caractérisé en ce qu'il comprend les étapes suivantes :
- ne transmettre un accusé de réception par le moyen de contrôle au moyen de traitement de données immédiatement en réponse à la requête d'écriture que si le moyen de contrôle est disponible pour une écriture des données initiales dans la mémoire,
- exécuter des tâches dans le moyen de traitement de données en réponse à l'accusé de réception simultanément à l'écriture des données initiales en des données écrites dans la mémoire,
- mettre en attente jusqu'à la fin de l'écriture le moyen de traitement de données si celui-ci transmet une autre requête d'écriture avant la fin de l'écriture, et
- n'accepter une autre requête d'écriture qu'après la fin de l'écriture des données initiales dans la mémoire par le moyen de contrôle.

Ainsi, les tâches relatives à au moins une application dans le moyen de traitement de données, tel que le processeur dans l'objet électronique portable, sont exécutées en parallèle à l'écriture des données initiales dans la mémoire. Toutefois, une autre requête d'écriture transmise au driver dans le moyen de contrôle n'est servie que lorsque l'écriture des données initiales est arrivée à son terme. Cela signifie que l'accès aux services du driver est réalisé au travers d'un sémaphore contrôlant les accès au processus d'écriture dans le driver et capable de gérer des conflits entre requêtes d'écriture et de retarder l'échéance de requêtes d'écriture ultérieures tant que le driver n'est pas reconnu comme disponible.

La libération du driver est signalé à l'application développée dans le moyen de traitement de données par un moyen de détection de fin d'écriture fourni dans l'objet électronique portable pour décompter une durée prédéterminée sensiblement dès que l'accusé de réception est transmis et signaler la fin de l'écriture à l'expiration de la durée prédéterminée. Selon une autre réalisation, l'étape d'accepter une autre requête d'écriture accompagne la désactivation d'un moyen d'augmentation de tension interne à la mémoire.

Le moyen de contrôle selon l'invention est également capable, conformément aux contraintes de sécurité, d'assurer un contrôle d'intégrité des données à écrire, c'est-à-dire une vérification de l'intégrité des données initiales comparativement aux données écrites intervenant entre l'écriture des données initiales et une lecture ultérieure des données écrites sous la commande du moyen de traitement de données. La vérification intervient soit juste après l'écriture des données initiales, notamment avant l'étape d'accepter une autre requête d'écriture, soit après la fin de l'écriture, particulièrement juste avant la lecture ultérieure des données écrites.

L'invention n'opère pas à la vérification d'intégrité des données initiales par simple lecture des données écrites et comparaison de celles-ci avec les données initiales lorsque les ressources en mémoire de l'objet électronique portable, tel que carte à puce, sont relativement limitées et ne permettent pas de stocker temporairement l'ensemble des données initiales au moment de leur écriture en mémoire. La vérification d'intégrité selon l'invention peut alors comprendre une comparaison d'une signature des données initiales avec une signature des données écrites lues. Chaque signature peut être déduite d'un codage à redondance cyclique des données correspondantes, ou résulter d'un hâchage des données correspondantes. L'occupation mémoire pour la vérification est ainsi réduite à une signature de données nettement plus courte que les données elles-mêmes. Sachant que la vérification d'intégrité peut être coûteuse en temps pour le moyen de traitement de données, la vérification est opérée "en différé", sous forme d'une tâche de priorité minimale, de manière à ne pas interférer avec des processus sensibles, par exemple la gestion d'un protocole de communication au niveau de la couche application.

Lors d'un défaut d'intégrité des données écrites comparativement aux données initiales, un moyen de sécurité, tel qu'un gestionnaire logiciel de sécurité, peut être activé par exemple pour empêcher l'usage normal de l'objet électronique portable. L'exécution de la vérification ne perturbe pas ainsi les tâches en cours dans l'application, parfois ininterruptibles comme les processus liés aux protocoles de communication par exemple. Pour garantir cette propriété, l'architecture logicielle du système d'exploitation dans le moyen de traitement de données s'adapte à cette contrainte en utilisant un véritable noyau en temps réel simplifié capable d'arbitrer les priorités attribuées à chacune des tâches.

D'autres caractéristiques et avantages de la présente invention apparaîtront plus clairement à la lecture de la description suivante de plusieurs réalisations préférées de l'invention en référence aux dessins annexés correspondants dans lesquels :
- la figure 1 est un diagramme temporel d'un processus d'écriture dans une mémoire selon la technique antérieure, déjà commentée ;
- la figure 2 est un bloc-diagramme schématique de l'architecture matérielle d'une carte à puce ;
- la figure 3 est un diagramme temporel d'un processus d'écriture dans une mémoire selon l'invention ;
- la figure 4 est un algorithme d'un processus d'écriture selon une première réalisation de l'invention; et
- la figure 5 est un algorithme de processus d'écriture et lecture de données selon une deuxième réalisation de l'invention.

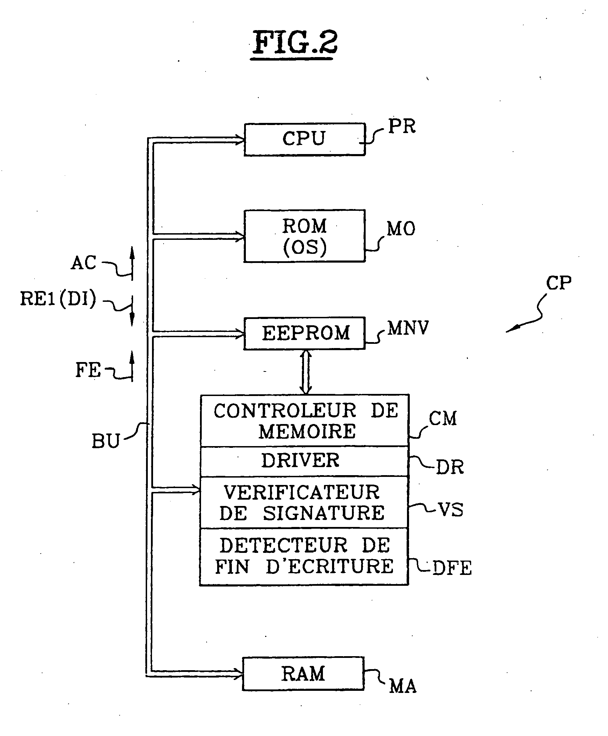

En référence à la figure 2, un microcontrôleur constituant la "puce" d'une carte à puce CP, ou de tout objet électronique portable équivalent, comme un module à microprocesseur dit carte à puce SIM (Subscriber Identity Mobile) insérable dans un terminal radiotéléphonique, contient principalement et schématiquement une unité de traitement centrale CPU formée par un microprocesseur PR, une mémoire MO de type ROM incluant un système d'exploitation OS de la carte éventuellement complété par un navigateur (browser) et des algorithmes d'application de communication et d'authentification spécifique, une mémoire non volatile MNV de type EEPROM qui contient des données notamment liées au possesseur de la carte, comme un numéro d'identification personnel et un répertoire de noms, et une mémoire MA de type RAM destinée essentiellement au traitement des données à recevoir d'une station d'accueil de la carte tel qu'un terminal radiotéléphonique ou bancaire et à transmettre vers la station d'accueil. Tous les composants PR, MO, MNV et MA sont reliés entre eux par un bus interne BU.

S'agissant de l'invention, la carte à puce comprend, en outre, un contrôleur CM pilotant la mémoire non volatile MNV pour établir des commandes, telles que écriture, lecture et effacement de données dans la mémoire, et pour adresser des cases de la mémoire. Le contrôleur de mémoire CM interagit avec le processeur PR au fur et à mesure du déroulement d'une application par l'échange de requêtes et réponses à travers le bus BU. En particulier, le contrôleur CM contient ou est associé au moins partiellement à un driver DR, pilotant au moins le processus d'écriture et le processus de lecture dans la mémoire MNV, à un vérificateur de signature VS et à un détecteur de fin d'écriture DFE. Les éléments DR, VS et CM sont réalisés sous forme matérielle et/ou logicielle ; si un élément est au moins sous forme logicielle, certaines de ces fonctionnalités peuvent être implantées dans la mémoire MO.

Dans la figure 3, on retrouve un diagramme temporel, comparable à celui selon la technique antérieure dans la figure 1, où une application AP s'appuyant sur le système d'exploitation OS se déroule avec des tâches successives T1, T2 et T3, de la gauche vers la droite. Il est supposé que l'application AP établit, vers la fin de la première tâche T1, une requête d'écriture RE1 qui est ensuite délivrée au driver DR. L'application est développée simultanément au processus d'écriture dans le driver qui n'interrompt pas l'application comme dans la figure 1 et ainsi ne bloque pas le déroulement des tâches suivantes T2, T3 succédant à la tâche T1 dans l'application.

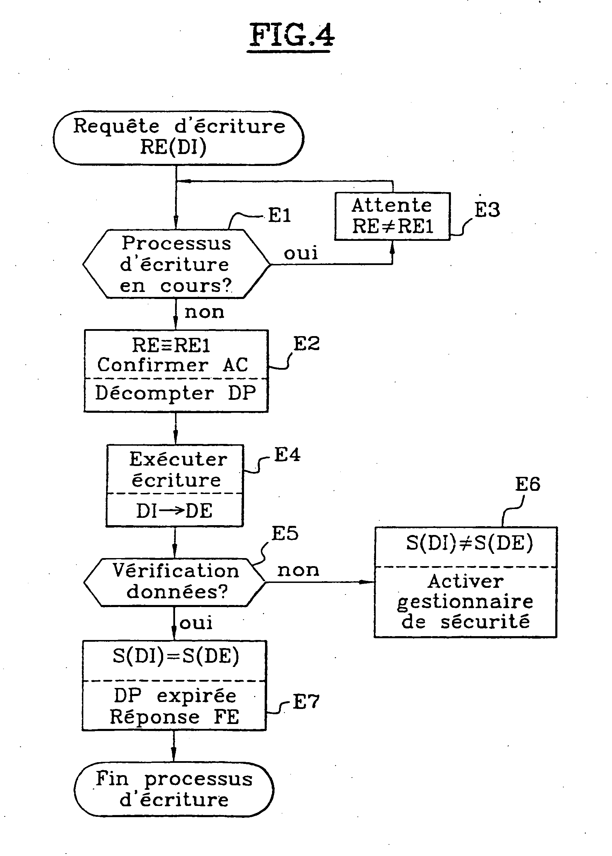

La figure 4 indique les étapes principales E1 à E7 qui sont rencontrées à la suite d'une requête d'écriture RE établie par l'application AP selon une première réalisation de l'invention.

A la première étape E1, le driver initie un processus d'écriture relatif à des données initiales DI contenues dans la requête RE, si le driver DR est libre de toute tâche d'écriture, comme indiqué en RE1 dans la figure 3 ; comme déjà dit, l'application AP continue de se dérouler parallèlement au processus d'écriture. Le driver confirme le lancement imminent de l'écriture à l'étape suivante E2, en transmettant un accusé de réception AC à l'application.

Par contre, comme indiqué à l'étape E3, si la requête d'écriture RE intervient en cours du processus d'écriture, comme la requête RE2 vers le milieu de la tâche T2 ou comme la requête RE3 vers le début de la tâche T3 (figure 3), l'application AP est interrompue jusqu'à la fin du processus d'écriture en cours, signalée par un signal de fin d'écriture FE du détecteur DFE ; la requête RE1 ou RE2 est mise en attente par inscription de celle-ci dans une file d'attente du driver qui sera lue dès que le processus d'écriture en cours est terminé.

Ainsi, si aux étapes du processus succédant aux étapes d'initialisation E1 et E2, la tâche suivante T2 ne nécessite aucune écriture, celle-ci sera exécutée sans interruption et sans être différée, comme selon la technique antérieure. Par exemple, une tâche T2 dans l'application AP consistant à envoyer une réponse vers une station d'accueil de la carte à puce ou à recevoir une requête depuis la station d'accueil n'est pas perturbée par le processus d'écriture en cours.

A l'étape E2, simultanément à l'établissement de la réponse AC, le détecteur de fin d'écriture DFE est activé lorsque, selon une première variante, le détecteur de fin d'écriture DFE n'est pas inclus directement dans le contrôleur CM de la mémoire MNV et est sous la forme d'un décompteur (timer) d'une durée prédéterminée DP, c'est-à-dire un décompteur d'impulsion d'horloge. Pré-programmé à une durée prédéterminée spécifiée de l'écriture mémoire, le détecteur de fin d'écriture DFE est activé avec le contrôleur CM par le processeur PR à la suite de la requête RE1.

Selon une deuxième variante, le détecteur de fin d'écriture DFE est implémenté dans le contrôleur MC de la mémoire non volatile MNV embarqué sur le microcircuit. Dans cet exemple, l'arrêt du processus d'écriture marqué par la réinitialisation de registres et la désactivation d'une "pompe de charge" augmentant une tension d'alimentation de la carte en une tension plus élevée de programmation interne à une mémoire réinscriptible de type EEPROM, nécessaire notamment à l'écriture, est automatique.

Après l'étape E4 succédant à l'étape E2, le driver DR écrit les données initiales DI contenues dans la requête RE1 dans la case désignée de la mémoire MNV. Le driver vérifie ensuite les données écrites à l'étape E5 qui est essentielle d'un point de vue de la sécurité. Au cours de l'étape E5, le driver DR lit les données écrites DE et le vérificateur VS les compare avec les données DI initialement contenues dans la requête RE1, avant l'étape d'écriture proprement dite E4. La comparaison dans le vérificateur VS est en fait une comparaison d'une signature S(DI) des données initiales avant écriture établie par le driver et d'une signature S(DE) des données lues après écriture. Les signatures S(DI) et S(DE) sont calculées suivant un même algorithme de vérification ; la signature S(DI) des données initiales dans la requête RE1 est immédiatement calculée en attente du calcul de là signature S(DE) des données écrites correspondantes, puis lues dans la mémoire. Ces signatures ont avantageusement une longueur nettement inférieure à celle des données.

Par exemple, chacune des signatures S(DI) et S(DE) est déduite d'un codage de redondance cyclique CRC (Cyclic Redundancy Check) réalisé très rapidement par le vérificateur VS sans intervention du processeur PR.

Selon un autre exemple, chacune des signatures S(DI) et S(DE) résulte d'un hachage des données correspondantes, c'est-à-dire résulte d'un prélèvement de parties prédéterminées des données correspondantes, et les signatures résultant des données initiales hachées et des données écrites puis lues et hachées sont comparées.

Le vérificateur VS peut être implanté en logique câblée, comme montré à la figure 2, ou bien implémenté sous forme de logiciel dans la mémoire ROM MO.

Si le test de vérification révèle un défaut d'intégrité des données écrites DE comparativement aux données initiales DI à l'étape E5, un moyen de sécurité, par exemple un gestionnaire de sécurité implémenté dans la mémoire MO de la carte à puce, est activé, comme indiqué à l'étape E6, afin d'exécuter une tâche de secours. La tâche de secours consiste par exemple à interdire toute communication entre la carte à puce CP et la station d'accueil de carte dans laquelle la carte a été introduite et ainsi à invalider la carte, ou à commander la ré-écriture des données initiales par exemple en interrompant l'application AP, ou à transférer le processus d'écriture de données initiales dans le driver vers une autre mémoire de la carte.

La fin du processus d'écriture avec vérification est constaté à l'étape E7 par le détecteur de fin d'écriture DFE qui le signale au contrôleur CM après la fin du processus d'écriture précédent. Le contrôleur est alors en état d'accepter une autre requête d'écriture, éventuellement déjà en attente comme la requête RE2 montrée à la figure 3.

En variante, le contrôleur CM génère un signal de fin d'écriture FE sous la forme d'une interruption transmise à l'application AP. Lorsque le détecteur DFE est le décompteur de durée précité, le passage à zéro de celui-ci correspondant à l'expiration de la durée prédéterminée DP est signalé par le signal FE au processeur PR qui arrête le contrôleur CM. Lorsque le détecteur DFE est implémenté directement dans le contrôleur CM, celui-ci génère automatiquement le signal FE pour le délivrer au processeur PR après un retard prédéterminé succédant à la désactivation de la "pompe de charge" nécessaire à l'écriture, ledit retard étant disponible pour la vérification.

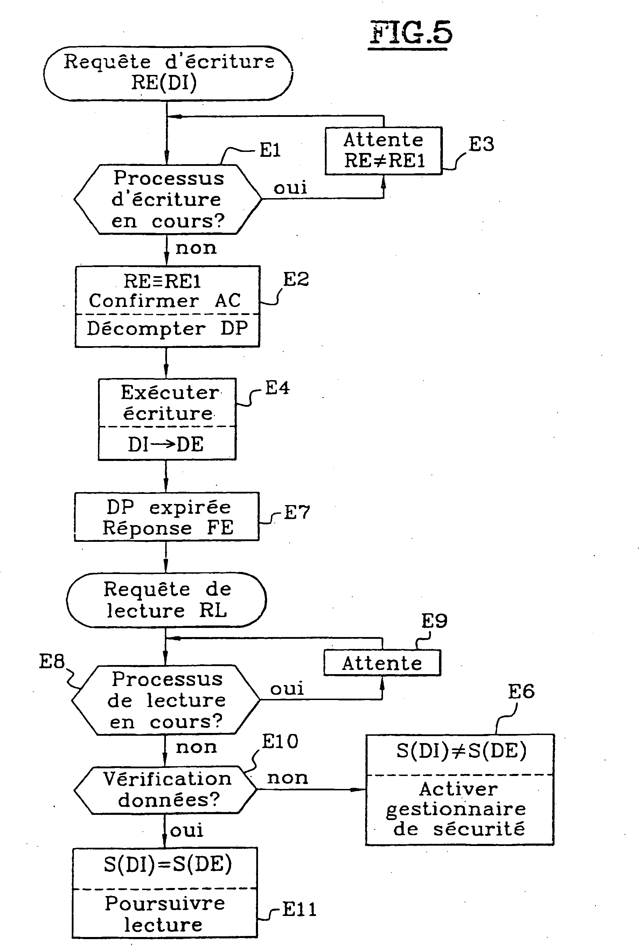

Selon une autre réalisation, l'étape de vérification E5 avec l'étape de sécurité E6 n'est pas incluse dans le processus d'écriture entre les étapes E4 et E7, mais au début du processus de lecture ultérieure des données écrites dans la mémoire MNV par le processeur PR, comme montré en E10 à la figure 5. L'étape E10 succède à une requête de lecture RL de l'application AP, appliquée par le processeur PR au driver DR à travers le bus BU. La requête de lecture RL est validée par le driver DR à une étape E8 pour la lecture, d'une manière analogue à l'étape E1, ou est mise en attente jusqu'à la fin d'un processus de lecture en cours à une étape E9, lorsque le driver DR traite une requête d'écriture.

Puis, après la vérification positive à l'étape E10, le processus de lecture est poursuivi d'une manière connue à une étape E11.

## Revendications

1. Procédé pour écrire des données initiales contenues dans une requête d'écriture (RE1) transmise par un moyen de traitement de données (PR, AP) à un moyen de contrôle d'écriture-lecture (CM, DR) d'une mémoire non volatile (MNV) dans un objet électronique portable (CP), **caractérisé en ce qu'**il comprend les étapes suivantes :
- ne transmettre (E1, E2) un accusé de réception (AC) par le moyen de contrôle (CM, DR) au moyen de traitement de données (PR, AP) immédiatement on réponse à la requête d'écriture (RE1) que si le moyen de contrôle est disponible pour une écriture (E4) des données initiales (DI) dans la mémoire,
- exécuter des tâches (T2,T3) dans le moyen de traitement de données en réponse à l'accusé de réception simultanément à l'écriture (E4) des données initiales (DI) en des données écrites (DE) dans la mémoire,
- mettre en attente (E3) jusqu'à la fin de l'écriture le moyen de traitement de données (PR, AP) si celui-ci transmet une autre requête d'écriture (RE2) avant la fin de l'écriture, et
- n'accepter (E7) une autre requête d'écriture (RE2) qu'après la fin de l'écriture des données initiales dans la mémoire (MNV) par le moyen de contrôle.

2. Procédé conforme à la revendication 1, selon lequel un moyen de détection de fin d'écriture (DFE) est fourni dans l'objet électronique portable (CP) pour décompter une durée prédéterminée (DP) sensiblement dès que l'accusé de réception (AC) est transmis (E2) et signaler la fin de l'écriture (E7) à l'expiration de la durée prédéterminée.

3. Procédé conforme à la revendication 1, selon lequel l'étape d'accepter (E7) une autre requête d'écriture accompagne la désactivation d'un moyen d'augmentation de tension interne à la mémoire (MNV).

4. Procédé conforme à l'une quelconque des revendications 1 à 3, comprenant une vérification (E5, E10) de l'intégrité des données initiales (DI) comparativement aux données écrites (DE) intervenant entre l'écriture des données initiales (E4) et une lecture ultérieure (E11) des données écrites (DE).

5. Procédé conforme à la revendication 4, selon lequel la vérification (E5) intervient juste après l'écriture (E4) des données initiales (DI).

6. Procédé conforme à la revendication 4, selon lequel la vérification (E10) intervient juste avant la lecture ultérieure (E11) des données écrites (DE).

7. Procédé conforme à l'une quelconque des revendications 4 à 6, selon lequel la vérification comprend une comparaison d'une signature (S(DI)) des données initiales avec une signature (S(DE)) des données écrites lues dans la mémoire (MNV).

8. Procédé conforme à la revendication 7, selon lequel chaque signature est déduite d'un codage à redondance cyclique des données correspondantes.

9. Procédé conforme à la revendication 7, selon lequel chaque signature résulte d'un hachage des données correspondantes.

10. Procédé conforme à l'une quelconque des revendications 4 à 9, comprenant l'activation d'un moyen de sécurité (E6) en réponse à un défaut d'intégrité des données écrites (DE) comparativement aux données initiales (DI).

11. Objet électronique portable (CP) comprenant un moyen de traitement de données (PR), une mémoire non volatile (MNV) et un moyen de contrôle d'écriture-lecture (CM) de la mémoire non volatile (MNV), **caractérisé en ce que** le moyen de contrôle (CM) et le moyen de traitement de données (PR) sont aptes à mettre en oeuvre le procédé selon l'une quelconque des revendications 1 à 10.

12. Objet électronique portable (CP) conforme à la revendication 11, **caractérisé en ce qu'**il est de type carte à puce.

## Claims

1. A method for writing initial data contained in a write request (RE1) transmitted by a data processing means (PR, AP) to a write/read control means (CM, DR) of a non volatile memory (MNV) in a portable electronic object (CP), **characterised in that** it comprises the following steps:
- transmitting (E1, E2) an acknowledgement (AC) by the control means (CM, DR) to the data processing means (PR, AP) immediately in response to the write request (RE1) only if the control means is available for writing (E4) the initial data (DI) in the memory,
- executing tasks (T2, T3) in the data processing means in response to the acknowledgement simultaneously with the writing (E4) of the initial data (DI) as data written (DE) in the memory,
- putting (E3) the data processing means (PR, AP) on standby until the end of the writing if the said means transmits another write request (RE2) before the end of writing, and
- accepting (E7) another write request (RE2) only after the end of the writing of the initial data in the memory (MNV) by the control means.

2. A method according to Claim 1, according to which an end of writing detection means (DFE) is provided in the portable electronic object (CP) in order to time a predetermined period (DP) substantially as soon as the acknowledgement (AC) is transmitted (E2) and to indicate the end of writing (E7) at the expiry of the predetermined period.

3. A method according to Claim 1, in which the step (E7) of accepting another write request accompanies the deactivation of a voltage increase means internal to the memory (MNV).

4. A method according to any one of Claims 1 to 3, comprising a verification (E5, E10) of the integrity of the initial data (DI) compared with the written data (DE) occurring between the writing of the initial data (E4) and a subsequent reading (E11) of the written data (DE).

5. A method according to Claim 4, according to which the verification (E5) occurs just after the writing (E4) of the initial data (DI).

6. A method according to Claim 4, according to which the verification (E10) occurs just before the subsequent reading (E11) of the data written (DE).

7. A method according to any one of Claims 4 to 6, according to which the verification comprises a comparison of a signature (S(DI)) of the initial data with a signature (S(DE)) of the written data read in the memory (MNV).

8. A method according to Claim 7, according to which each signature is deduced from a cyclic redundancy coding of the corresponding data.

9. A method according to Claim 7, according to which each signature results from a chopping of the corresponding data.

10. A method according to any one of Claims 4 to 9, comprising the activation of a security means (E6) in response to a lack of integrity in the written data (DE) compared with the initial data (DI).

11. A portable electronic object (CP) comprising a data processing means (PR), a non volatile memory (MNV) and a write/read control means (CM) of the non volatile memory (MNV) **characterised in that** the write/read control means (CM) and the data processing means (PR) are able to run the method according to any one of Claims 1 to 10.

12. A portable electronic object (CP) according to Claim 10 wherein the portable electronic object is a smart card.

## Patentansprüche

1. Verfahren zum Schreiben von anfänglichen Daten, die in einer Schreibanfrage (RE1) enthalten sind, welche durch ein Datenverarbeitungsmittel (PR, AP) auf ein Schreib-Lese-Steuermittel (CM, DR) eines nicht flüchtigen Speichers (MNV) in einem tragbaren elektronischen Objekt übertragen wird, **dadurch gekennzeichnet, dass** es die folgenden Stufen umfasst:
- eine Empfangsbestätigung (AC) durch das Steuermittel (CM, DR) an das Datenverarbeitungsmittel (PR, AP) unverzüglich als Antwort auf die Schreibanfrage (RE1) nur dann übertragen (E1, E2), wenn das Steuermittel für ein Schreiben (E4) der anfänglichen Daten (DI) im Speicher verfügbar ist,
- Aufgaben (T2, T3) im Datenverarbeitungsmittel als Antwort auf die Empfangsbestätigung gleichzeitig mit dem Schreiben (E4) der anfänglichen Daten (DI) in Daten ausführen, die in den Speicher geschrieben wurden (DE),
- Das Datenverarbeitungsmittel (PR, AP) bis zum Ende des Schreibens auf Wartestellung stellen (E3), wenn es eine andere Schreibanfrage (RE2) vor dem Ende des Schreibens überträgt und
- eine andere Schreibanfrage (E7) erst nach dem Ende des Schreibens der anfänglichen Daten im Speicher (MNV) durch das Steuermittel akzeptieren.

2. Verfahren gemäß Anspruch 1, nach dem ein Detektionsmittel des Abschlusses des Schreibens (DFE) in dem tragbaren elektronischen Objekt (CP) geliefert wird, um eine deutlich vorbestimmte Dauer (DP) zu zählen, sobald die Empfangsbestätigung (AC) übertragen worden ist (E2) und den Abschluss des Schreibens (E7) bei Ablauf der vorbestimmten Dauer signalisieren.

3. Verfahren gemäß Anspruch 1, nach dem die Stufe des Akzeptieren (E7) einer weiteren Schreibanfrage die Deaktivierung eines Mittels zum Erhöhen der internen Spannung im Speicher (MNV) begleitet.

4. Verfahren gemäß Anspruch 1 bis 3, das eine Überprüfung (E5, E10) der Integrität der anfänglichen Daten (DI) im Vergleich zu den geschriebenen Daten (DE) umfasst, die zwischen dem Schreiben der anfänglichen Daten (E4) und einem späteren Lesen (E11) der geschriebenen Daten (DE) erfolgt.

5. Verfahren gemäß Anspruch 4, nach dem die Überprüfung (E5) direkt nach dem Schreiben (E4) der anfänglichen Daten (DI) erfolgt.

6. Verfahren gemäß Anspruch 4, nach dem die Überprüfung (E10) direkt vor dem späteren Lesen (E11) der geschriebenen Daten (DE) erfolgt.

7. Verfahren gemäß Anspruch 4 bis 6, nach dem die Überprüfung einen Vergleich einer Unterschrift (S(DI)) der anfänglichen Daten mit einer Unterschrift (S(DE)) der im Speicher (MNV) gelesenen geschriebenen Daten umfasst.

8. Verfahren gemäß Anspruch 7, nach dem jede Unterschrift von einer Kodierung mit zyklischer Redundanz der entsprechenden Daten abgezogen wird.

9. Verfahren gemäß Anspruch 7, nach dem jede Unterschrift aus einem Zerhacken der entsprechenden Daten resultiert.

10. Verfahren gemäß Anspruch 4 bis 9, das die Aktivierung eines Sicherheitsmittels (E6) als Antwort auf einen Integritätsfehler der geschriebenen Daten (DE) im Vergleich zu den anfänglichen Daten (DI) umfasst.

11. Tragbares elektronisches Objekt (CP), das ein Datenverarbeitungsmittel (PR), einen nicht flüchtigen Speicher (MNV) und ein Schreib-Lese-Steuermittel (CM) des nicht flüchtigen Speichers (MNV) umfasst, **dadurch gekennzeichnet, dass** das Steuermittel (CM) und das Datenverarbeitungsmittel (PR) geeignet sind, das Verfahren gemäß Anspruch 1 bis 10 umzusetzen.

12. Tragbares elektronisches Objekt (CP) gemäß Anspruch 11, **dadurch gekennzeichnet, dass** es vom Typ Chipkarte ist.
